# EUROPÄISCHE PATENTANMELDUNG

(11) **EP 0 771 810 A1**
(43) Veröffentlichungstag der Anmeldung: **07.05.1997**
(21) Anmeldenummer: 96116381.3
(22) Anmeldetag: 12.10.1996
(51) Int. Cl.: C07F 9/09, C08K 5/521, C08L 75/04

(54) **Verfahren zur Herstellung von Mischungen von oligomeren Phosphorsäureestern und deren Verwendung als Flammschutzmittel für Polyurethanschäume**

(30) Priorität: 03.11.1995 DE 19540861
(71) Anmelder: HOECHST AKTIENGESELLSCHAFT, 65926 Frankfurt am Main (DE)
(72) Erfinder: Sicken, Martin, Dr., 51149 Köln (DE)

(57) **Zusammenfassung**

Die Erfindung betrifft ein Verfahren zur Herstellung von Mischungen oligomerer Phos phorsäureester der allgemeinen Formel (I), 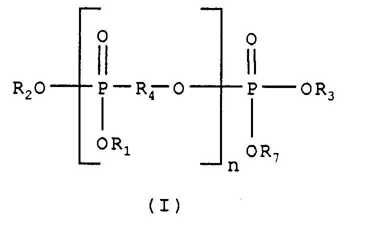 in denen
n eine Zahl von 0 bis 8,
R₁, R₂, R₃, R₇ gleich oder verschieden sind und einen halogenfreien Alkyl- oder Arylrest oder einen hydroxylhaltigen Rest der allgemeinen Formel II und R₄ einen Rest der allgemeinen Formel III bedeutet, 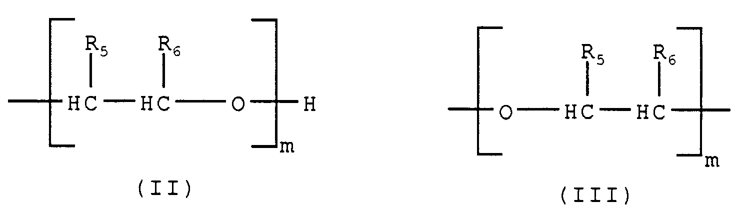
wobei in den Formeln II und III R₅ und R₆ ein Wasserstoffatom oder ein Alkylrest und m eine Zahl von 1 bis 4 bedeutet, dadurch gekennzeichnet, daß man in einer ersten Stufe aliphatische oder araliphatische Alkohole und/oder Phenole mit Phosphorpentoxid (P₄O₁₀) im Molverhältnis (2.8 bis 6.0) : 1.0 (Alkohol/Phenol : P₄O₁₀) bei einer Temperatur von 20 bis 100 °C innerhalb von 0,5 bis 72 Stunden umsetzt, wobei ein Polyphosphorsäurepartialestergemisch der allgemeinen Formel V erhalten wird, 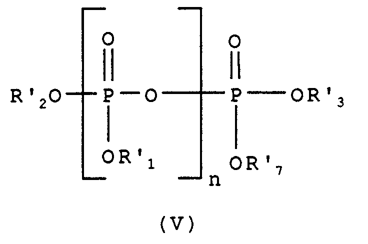 in der R₁', R₂', R₃', R₇' einen Alkyl- oder Arylrest oder H bedeuten, in einer zweiten Stufe mit einem Epoxid der Formel (IV) bei einer Temperatur von 20 - 180°C umsetzt.

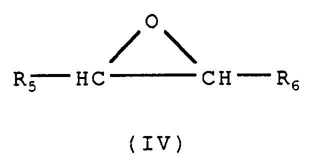

Die Erfindung betrifft ebenfalls die Verwendung der nach diesem Verfahren hergestellten Mischungen als Flammschutzmittel für Polyurethane.

## Beschreibung

Die Erfindung betrifft ein Verfahren zur Herstellung von Mischungen von oligomeren Phosphorsäureestern der allgemeinen Formel (I), 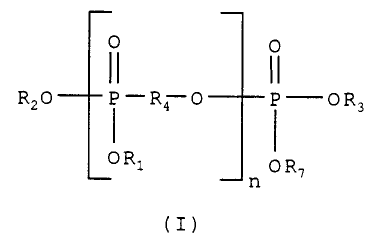 in der n eine Zahl von 0 bis 8, R₁, R₂, R₃, R₇ gleich oder verschieden sind und einen halogenfreien Alkyl- oder Arylrest oder einen hydroxylhaltigen Rest der allgemeinen Formel (II) und R₄ einen Rest der allgemeinen Formel (III) bedeutet, 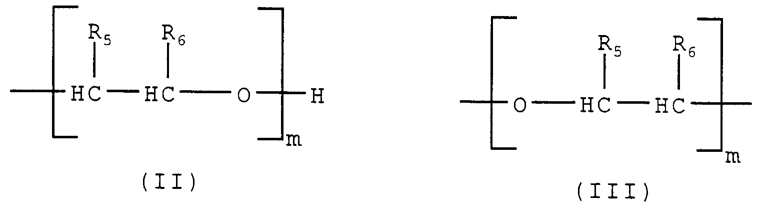 wobei in den Formeln (II) und (III) R₅ und R₆ ein Wasserstoffatom oder einen Alkylrest und m eine Zahl von 1 bis 4 bedeutet sowie die Verwendung der so hergestellten Phosphorsäureester.

Polyurethan-Schaumstoffe werden in großem Ausmaß in den verschiedensten Anwendungen eingesetzt. In Anwendungsgebieten, die hohe Anforderungen an das Brandverhalten der enthaltenen Materialien stellen (z.B. Automobilinnenausstattung, Bauisolierungen, Elektro/Elektronik), ist die Verwendung von Polyurethanen und Polyisocyanuraten nur mit Hilfe zugesetzter Flammschutzmittel möglich. Als Flammschutzmittel werden vorwiegend die chlorhaltigen Phosphorsäurester Tris(2-chlorethyl)phosphat (TCEP), Tris(chlorisopropyl)phosphat (TCPP), Tris(2,3-dichlorpropyl)phosphat (TDCPP) sowie bromhaltige Produkte wie Dibromneopentylglykol und bromierte Polyole eingesetzt. Diesen Produkten ist gemeinsam, daß sie zur Erreichung der geforderten Flammschutzeffektivität als wesentlichen Bestandteil Halogene in gebundener Form enthalten. Dies ist von Nachteil, da halogenhaltige Produkte im Brandfalle korrosive Halogenwasserstoffe entwickeln, die häufig Ursache für Sekundärschäden sind, welche die eigentlichen Brandschäden um ein vielfaches übersteigen können. Darüberhinaus zeigen halogenierte Produkte im Brandfalle eine starke Rauchentwicklung.

Für die erstgenannte Produktgruppe ist desweiteren von Nachteil, daß sie als additive Flammschutzmittel lediglich physikalisch eingelagert werden, was zur Folge hat, das beispielsweise bei thermischer Belastung deren teilweise Emigration erfolgen kann. Dieser nachteilige Effekt, der vor allem bei offenzelligen Schäumen eine erhebliche Rolle spielt, verursacht nicht nur mit der Zeit das Nachlassen der Flammschutzwirkung und damit die Erhöhung des einzusetzenden Flammschutzmittelanteils, sondern führt auch zur Kontamination der Umgebung der Produkte sowie zu unerwünschten Oberflächenveränderungen der Materialien. So tragen solche additiven Zusätze beispielsweise zum sogenannten "Fogging", der Kondensation von verdampften flüchtigen Bestandteilen aus der Kraftfahrzeuginnenausstattung an der Windschutzscheibe, bei. Diese Erscheinung kann nach DIN 75201 quantitativ erfaßt werden.

Eine wesentliche Verbesserung in dieser Hinsicht bedeutet die Verwendung reaktiver (statt additiver) Flammschutzmittel; im Falle von Polyurethanen etwa von phosphor-und chlorhaltigen Polyolen, die allein oder im Gemisch mit konventionellen Polyolen mit Polyisocyanaten zur Reaktion gebracht und somit in das Polymergerüst kovalent eingebunden werden.

Die DE-PS 20 36 587 beschreibt ein Verfahren zur Herstellung von Phosphorsäureestern durch sukzessive Umsetzung von Phosphorpentoxid und/oder Polyphosphorsäure mit halogenierten Alkanolen oder Phenolen und mit einem Epoxid. Die nach diesem Verfahren erhaltenen Produkte weisen den Nachteil auf, daß sie zur Erreichung der geforderten Flammschutzeffektivität als wesentlichen Bestandteil Halogene in gebundener Form enthalten. Dies ist unerwünscht, da halogenhaltige Produkte im Brandfalle korrosive Halogenwasserstoffe und unter bestimmten Umständen toxische Zersetzungsprodukte freisetzen können.

In der DE-OS-43 42 972 wird ein Verfahren zur Herstellung von Gemischen Hydroxyalkoxygruppen tragender oligomerer Phosphorsäureester beschrieben, bei dem man ortho-Phosphorsäureester mit Phosphorpentoxid umsetzt, in dem erhaltenen Polyphosphorsäureestergemisch selektiv die P-O-P-Bindungen partiell hydrolysiert oder glykolysiert und das dabei entstehende Gemisch von Polyphosphorsäurepartialestern mit einem Epoxid umsetzt. Nachteilig ist bei diesem Verfahren , daß als Rohstoffe die relativ teuren Trialkylphosphate eingesetzt werden.

Es ist Aufgabe der vorliegenden Erfindung, ein einfaches und kostengünstiges Verfahren zur Herstellung derartiger Phosphorsäureester zur Verfügung zu stellen, nach dem Produkte erhalten werden, die reaktiv (einbaufähig) und halogenfrei sind und gleichzeitig eine hohe permanente Flammschutzeffizienz beim Einsatz in Polyurethanschäumen aufweisen.

Gelöst wird diese Aufgabe durch ein Verfahren gemäß dem Oberbegriff von Anspruch 1, dadurch gekennzeichnet, daß man in einer ersten Stufe aliphatische oder araliphatische Alkohole und/oder Phenole mit Phosphorpentoxid (P₄O₁₀) im Molverhältnis (2.8 bis 6.0) : 1.0 (Alkohol/Phenol : P₄O₁₀) bei einer Temperatur von 20 bis 100 °C innerhalb von 0,5 bis 72 Stunden umsetzt, wobei ein Polyphosphorsäurepartialestergemisch der allgemeinen Formel (V) erhalten wird, 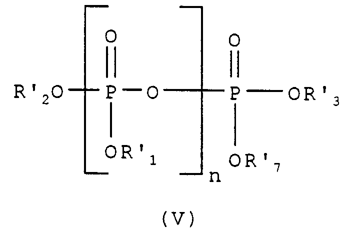 in der R₁', R₂', R₃', R₇' einen Alkyl- oder Arylrest oder H bedeuten, in einer zweiten Stufe mit einem Epoxid der Formel (IV) 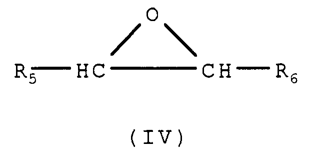 in der R₅ und R₆ die vorgenannte Bedeutung haben, bei einer Temperatur von 20 - 180°C umsetzt.

Bevorzugt beträgt das Molverhältnis Alkohol/Phenol : P₄O₁₀ (3.0-4.5) : 1 .

Bevorzugt setzt man in der ersten Stufe bei einer Temperatur von 20 bis 60 °C um.

Bevorzugt setzt man in der ersten Stufe innerhalb von 2 bis 6 Stunden um.

Bevorzugt setzt man in der zweiten Stufe bei einer Temperatur von 60 bis 100 °C um.

Bevorzugt beträgt das Verhältnis von hydroxylhaltigen zu nicht-hydroxylhaltigen Gruppen in den Mischungen der Formel (I) etwa 1 : 1.

Die nach dem erfindungsgemäßen Verfahren hergestellten oligomeren Phosphorsäureester finden ihre Verwendung vor allem in Polyurethanschäumen.

Bevorzugte Ausgangsstoffe für die erste Verfahrensstufe sind Methanol, Ethanol, Propanol, Butanol, Phenol und/oder Kresol. Als Epoxide der Formel (IV) kommen vorzugsweise solche in Frage, in denen R₅ und R₆ ein Wasserstoff- oder Methylradikal bedeuten, insbesondere Ethylenoxid und Propylenoxid.

Das Verfahren der Erfindung erlaubt durch Variation der Art und Mengenverhältnisse der Ausgangsstoffe die Herstellung eines breiten Spektrums von Produkten. Es ist somit geeignet, speziellen Anforderungen z.B. bezüglich der durchschnittlichen Kettenlänge, der Hydroxylzahl, des Phosphorgehaltes sowie der Viskosität gerecht zu werden.

Die nach dem erfindungsgemäßen Verfahren hergestellten Mischungen der oligomeren Phosphorsäureester enthalten beispielsweise 0 bis 65 Gew.-% Verbindungen der Formel I mit n = 0, 0 bis 50 Gew.-% Verbindungen der Formel I mit n = 1, 0 bis 50 Gew.-% Verbindungen der Formel I mit n = 2, 0 bis 50 Gew.-% Verbindungen der Formel I mit n = 3, 0 bis 45 Gew.-% Verbindungen der Formel I mit n = 4 und 0 bis 50 Gew.-% Verbindungen der Formel I mit n > 4, wobei die Summe 100 Gew.-% beträgt. Auch andere Zahlenverhältnisse lassen sich entsprechend herstellen.

### Beispiel 1

In einem Reaktor ausgestattet mit Rührer, Thermometer, Gaseinleitungsrohr und Rückflußkühler, wurden 166.5 g (5.2 mol) Methanol vorgelegt. Unter Ausschluß von Luftfeuchtigkeit wurden unter starkem Rühren 443 g (1.56 mol) P₄O₁₀ so hinzugefügt, daß die Temperatur 40 °C nicht überstieg. Anschließend wurde 6 Stunden auf 80 °C erhitzt. In die braun gefärbte Reaktionsmischung wurde bei einer Temperatur von 70 °C Ethylenoxid eingeleitet, bis starker Rückfluß in dem mit Methanol und Trockeneis beschickten Kühler zu beobachten war. Nach 1 h Nachreaktion bei 100 °C wurde der verbliebene Ethylenoxid-Überschuß mittels Durchleiten eines starken Stickstoffstroms aus dem Reaktionsgemisch entfernt.

Es wurden 1013 g einer schwach gelblichen Flüssigkeit mit einer Brookfield-Viskosität von 3650 mPa·s (25 °C), einer Säurezahl von 0.3 mg KOH/g, einer Hydroxylzahl von 204 mg KOH/g und einem Phosphorgehalt von 14.7 Gew.-% erhalten. Die Mischung setzt sich aus Produkten der Formel (I) mit n = 0 (ca. 10 Gew.-%), n = 1 (ca. 20 Gew.-%), n = 2 (ca. 30 Gew.-%), n = 3 (ca. 20 Gew.-%), n = 4 (ca. 10 Gew.-%) und n > 4 (ca. 10 Gew.-%) zusammen, wobei jeweils R₁ bzw. R₇ = Methoxy, R₅ und R₆ = H sind.

### Beispiel 2

In einem Reaktionsgefäß analog Beispiel 1 wurden 300 g (9.34 mol) Methanol vorgelegt. Unter Ausschluß von Luftfeuchtigkeit wurden unter starkem Rühren 443 g (1.56 mol) P₄O₁₀ so hinzugefügt, daß die Temperatur 40 °C nicht überstieg. Anschließend wurde 6 Stunden auf 80 °C erhitzt. In die braun gefärbte Reaktionsmischung wurde bei einer Temperatur von 70 °C Ethylenoxid eingeleitet, bis starker Rückfluß in dem mit Methanol und Trockeneis beschickten Kühler zu beobachten war. Nach 1 h Nachreaktion bei 100 °C wurde der verbliebene Ethylenoxid-Überschuß mittels Durchleiten eines starken Stickstoffstroms aus dem Reaktionsgemisch entfernt. So wurden 1800 g einer schwach gelblichen Flüssigkeit mit einer Brookfield-Viskosität von 170 mPa·s (25 °C), einer Säurezahl von 0.3 mg KOH/g, einer Hydroxylzahl von 260 mg KOH/g und einem Phosphorgehalt von 10.2 Gew.-% erhalten. Die Mischung setzt sich aus Produkten der Formel (I) mit n = 0 (ca. 60 Gew.-%), n = 1 (ca. 20 Gew.-%), n = 2 (ca. 10 Gew.-%), n > 2 (ca. 10 Gew.-%) zusammen, wobei jeweils R₁ bzw. R₇ = Methoxy, R₅ und R₆ = H sind.

### Beispiel 3

In einem Reaktionsgefäß analog Beispiel 1 wurden 300 g (6.52 mol) Ethanol vorgelegt. Unter Ausschluß von Luftfeuchtigkeit wurden unter starkem Rühren 460 g (1.61 mol) P₄O₁₀ so hinzugefügt, daß die Temperatur 40 °C nicht überstieg. Anschließend wurde 4 Stunden auf 80 °C erhitzt. In die braun gefärbte Reaktionsmischung wurde bei einer Temperatur von 70 °C Ethylenoxid eingeleitet, bis starker Rückfluß in dem mit Methanol und Trockeneis beschickten Kühler zu beobachten war. Nach 1 h Nachreaktion bei 100 °C wurde der verbliebene Ethylenoxid-Überschuß mittels Durchleiten eines starken Stickstoffstroms aus dem Reaktionsgemisch entfernt. So wurden 1500 g einer schwach gelblichen Flüssigkeit mit einer Brookfield-Viskosität von 500 mPa·s (25 °C), einer Säurezahl von 0.6 mg KOH/g, einer Hydroxylzahl von 200 mg KOH/g und einem Phosphorgehalt von 13.8 Gew.-% erhalten. Die Mischung setzt sich aus Produkten der Formel (I) mit n = 0 (ca. 20 Gew.-%), n = 1 (ca. 40 Gew.-%), n = 2 (ca. 15 Gew.-%), n = 3 (ca. 10 Gew.-%), n > 3 (ca. 15 Gew.-%) zusammen, wobei jeweils R₁ bzw. R₇ = Ethoxy, R₅ und R₆ = H sind.

### Beispiel 4

In einem Reaktionsgefäß analog Beispiel 1 wurden 319 g (6.9 mol) Ethanol mit 596.4 g (2.1 mol) P₄O₁₀ und Ethylenoxid entsprechend der in Beispiel 1 angegebenen Vorschrift umgesetzt. So wurden 1700 g einer schwach gelblichen Flüssigkeit mit einer Brookfield-Viskosität von 2100 mPa·s (25 °C), einer Säurezahl von 0.5 mg KOH/g, einer Hydroxylzahl von 200 mg KOH/g und einem Phosphorgehalt von 14.3 Gew.-% erhalten. Das Gemisch setzt sich aus Produkten der Formel (I) mit n = 0 (ca. 10 Gew.-%), n = 1 (ca. 20 Gew.-%), n = 2 (ca. 30 Gew.-%), n = 3 (ca. 20 Gew.-%), n = 4 (ca. 10 Gew.-%) und n > 4 (ca. 10 Gew.-%) zusammen, wobei jeweils R₁ bzw. R₇ = Ethoxy, R₅ und R₆ = H sind.

### Beispiel 5

In einem Reaktionsgefäß analog Beispiel 1 wurden 164 g (2.2 mol) Butanol mit 188.6 g (0.66 mol) P₄O₁₀ und Ethylenoxid entsprechend der in Beispiel 1 angegebenen Vorschrift umgesetzt .So wurden 510 g einer schwach gelblichen Flüssigkeit mit einer Brookfield-Viskosität von 580 mPa·s (25 °C), einer Säurezahl von 0.5 mg KOH/g, einer Hydroxylzahl von 180 mg KOH/g und einem Phosphorgehalt von 13.1 Gew.-% erhalten. Das Gemisch setzt sich aus Produkten der Formel (I) mit n = 0 (ca. 10 Gew.-%), n = 1 (ca. 20 Gew.-%), n = 2 (ca. 30 Gew.-%), n = 3 (ca. 20 Gew.-%), n = 4 (ca. 10 Gew.-%) und n > 4 (ca. 10 Gew.-%) zusammen, wobei jeweils R₁ bzw. R₇ = Butoxy, R₅ und R₆ = H sind.

### Beispiel 6

Das Produkt gemäß Beispiel 1 wurde in einen Polyurethanweichschaum folgender Formulierung (Teile = Gewichtsteile) inkorporiert:

| | | |
|---|---|---|
| 100 | Teile | ®Caradol 46-3 (Polyetherpolyol, Shell) |
| 7.5 | Teile | Produkt aus Beispiel 1 |
| 4.0 | Teile | Wasser |
| 0.4 | Teile | Dimethylethanolamin |
| 0.2 | Teile | ®Desmorapid SO (Bayer) |
| 1.0 | Teile | ®Tegostab B 3640 (Goldschmidt) |
| 51 | Teile | Toluylendiisocyanat (®Desmodur T 80, Bayer) |

Zur Herstellung des Versuchsschaumes wurden alle Komponenten - mit Ausnahme des Toluylendiisocyanates - intensiv vermischt und anschließend mit ®Desmodur T 80 versetzt.

Nach einer Startzeit von 15 sec, einer Steigzeit von 150 sec und einer Nachbehandlung von 15 min bei 140 °C Umluft wurde ein Polyurethan-Weichschaum mit einem Raumgewicht von 29 kg/m³ erhalten.

Zur Ermittlung der Flammfestigkeit des Versuchsschaumes gemäß Beispiel 6 und 7 wurden der Sauerstoffindex (LOI) nach ASTM-D-2863-77 bestimmt und der amerikanische Test FMVSS-302 (FMVSS = Federal Motor Vehicle Safety Standard) durchgeführt.

Es wurde ein Sauerstoffindex von 0.22 gefunden. Beim Brandtest FMVSS 302 wurde die beste Klasse SE (self extinguishing) bei einer mittleren Brandstrecke von 23 mm erreicht.

Gemäß DIN 75201-G wurden der Schaum bezüglichdes Foggingverhaltens geprüft. Es wurde ein Kondensat von lediglich 0.6 mg gefunden.

### Beispiel 7

Das Produkt gemäß Beispiel 3 wurde in einen Polyurethanhartschaum folgender Formulierung (Gewichtsteile) inkorporiert:

| | | |
|---|---|---|
| 100 | Teile | ®Caradol 585 (Polyetherpolyol, Shell) |
| 25 | Teile | Produkt aus Beispiel 3 |
| 3.0 | Teile | Wasser |
| 2.5 | Teile | Dimethylcyclohexylamin |
| 2.0 | Teile | ®DC 193 (Siliconstabilisator, Dow Corning) |
| 15 | Teile | Treibmittel R 141 b |
| 214 | Teile | Polyisocyanat (®Caradate 30, Shell) |

Zur Beurteilung der Flammwidrigkeit wurde der Kleinbrennertest nach DIN 4102 Teil 1 durchgeführt. Der Schaum gemäß Beispiel 7 mit einer Rohdichte von 33 kg/m³ erreicht hierbei die Klasse B 2. Dies ist bei Verwendung des technisch verwendeten halogenhaltigen, additiven Tris(2-chlorpropyl)phosphat (TCPP) erst bei einer Einsatzmenge von 30 Teilen zu erreichen.

Diese Ergebnisse zeigen deutlich die hervorragende Eignung der erfindungsgemäß hergestellten Produkte bezüglich ihrer Verwendung als reaktive Flammschutzmittel für Polyurethanweichschäume und Polyurethanhartschäume.

## Patentansprüche

1. Verfahren zur Herstellung von Mischungen oligomerer Phosphorsäureester der allgemeinen Formel (I), 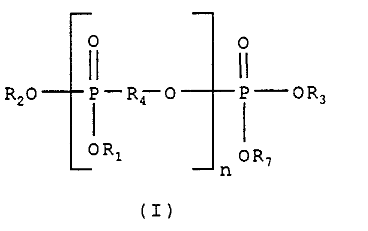 in denen
n eine Zahl von 0 bis 8,
R₁, R₂, R₃, R₇ gleich oder verschieden sind und einen halogenfreien Alkyl-oder Arylrest oder einen hydroxylhaltigen Rest der allgemeinen Formel II und R₄ einen Rest der allgemeinen Formel III bedeutet, 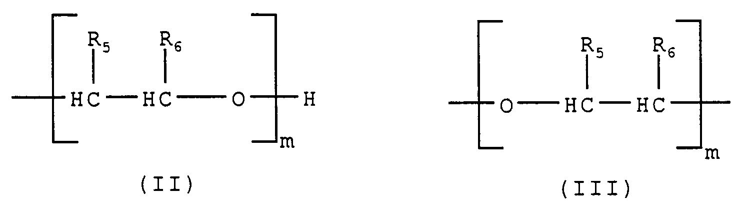
wobei in den Formeln II und III R₅ und R₆ ein Wasserstoffatom oder ein Alkylrest und m eine Zahl von 1 bis 4 bedeutet, dadurch gekennzeichnet, daß man in einer ersten Stufe aliphatische oder araliphatische Alkohole und/oder Phenole mit Phosphorpentoxid (P₄O₁₀) im Molverhältnis (2.8 bis 6.0) : 1.0 (Alkohol/Phenol : P₄O₁₀) bei einer Temperatur von 20 bis 100 °C innerhalb von 0,5 bis 72 Stunden umsetzt, wobei ein Polyphosphorsäurepartialestergemisch der allgemeinen Formel V erhalten wird, 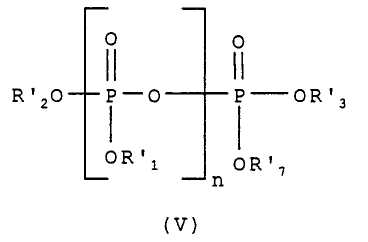 in der R₁', R₂', R₃', R₇' einen Alkyl- oder Arylrest oder H bedeuten, in einer zweiten Stufe mit einem Epoxid der Formel (IV) bei einer Temperatur von 20 - 180°C umsetzt.

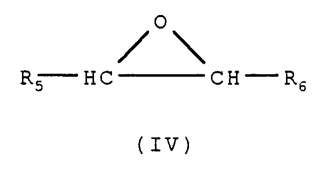

2. Verfahren nach Anspruch 1, dadurch gekennzeichnet, daß das Molverhältnis (3.0-4.5) : 1 beträgt.

3. Verfahren nach Anspruch 1 oder 2, dadurch gekennzeichnet, daß man in der ersten Stufe bei einer Temperatur von 20 bis 60 °C umsetzt.

4. Verfahren nach mindestens einem der Ansprüche 1 bis 3, dadurch gekennzeichnet, daß man in der ersten Stufe innerhalb von 2 bis 6 Stunden umsetzt.

5. Verfahren nach mindestens einem der Ansprüche 1 bis 4, dadurch gekennzeichnet, daß man in der zweiten Stufe bei einer Temperatur von 60 bis 100 °C umsetzt.

6. Verfahren nach mindestens einem der Ansprüche 1 bis 5, dadurch gekennzeichnet, daß das Verhältnis von hydroxylhaltigen zu nicht-hydroxylhaltigen Gruppen etwa 1 : 1 beträgt.

7. Verwendung von Mischungen von oligomeren Phosphorsäureestern hergestellt nach mindestens einem der Ansprüche 1 bis 6 in Polyurethanschäumen.
